# EUROPÄISCHE PATENTSCHRIFT

(11) **EP 0 991 703 B1**
(45) Veröffentlichungstag und Bekanntmachung des Hinweises auf die Patenterteilung: **13.06.2001**
(21) Anmeldenummer: 98931900.9
(22) Anmeldetag: 08.04.1998
(51) Int. Cl.: C08J 7/04, C09D 191/06

(54) **OBERFLÄCHENVERBESSERNDES MATERIAL FÜR NICHTLACKIERTE KUNSTSTOFFOBERFLÄCHEN**
SURFACE-IMPROVING MATERIAL FOR UNVARNISHED PLASTIC SURFACES
MATERIAU AMELIORANT LES SURFACES POUR SURFACES DE MATIERE PLASTIQUE NON VERNISSEES

(30) Priorität: 16.06.1997 DE 29710679 U
(43) Veröffentlichungstag der Anmeldung: 12.04.2000
(73) Patentinhaber: Petri AG, 63743 Aschaffenburg (DE)
(72) Erfinder: BRAND, Klaus, D-63874 Dammbach (DE); FORSTMEYER, Egbert, D-63739 Aschaffenburg (DE); VÄTH, Norbert, D-97839 Esselbach (DE)
(74) Vertreter: Bröseke, Eribert, Dipl.-Ing.
(86) Internationale Anmeldenummer: DE9801036
(87) Internationale Veröffentlichungsnummer: WO9858013

(56) Entgegenhaltungen:
- GB-A- 1 058 393
- PATENT ABSTRACTS OF JAPAN vol. 012, no. 209 (C-504), 15. Juni 1988 & JP 63 008436 A (UCHIYAMA MFG CORP), 14. Januar 1988
- DATABASE WPI Section Ch, Week 9517 Derwent Publications Ltd., London, GB; Class A26, AN 95-128607 XP002083914 & JP 07 053922 A (NIPPON CHEM KOGYO KK) , 28. Februar 1995
- PATENT ABSTRACTS OF JAPAN vol. 097, no. 003, 31. März 1997 & JP 08 311410 A (TAIHO IND CO LTD), 26. November 1996

## Beschreibung

Die Erfindung betrifft ein oberflächenverbesserndes Material für nichtlackierte Kunststoffoberflächen.

Kunststoffe finden in nahezu allen Einsatzgebieten des Automobilbaus zunehmende Verwendung, so auch bei der Herstellung von Abdeckungen von Airbageinheiten. Bei den Gegenständen für Kraftfahrzeuge sollten sich die Kunststoffteile weder optisch noch durch geringere Beständigkeit gegen mechanische Belastung, Witterung usw. von den metallischen Teilen im Automobilbau unterscheiden. Um dies zu erreichen, ist man bestrebt, die Kunststoffteile so herzustellen, daß sie sich hinsichtlich Aussehen und Beständigkeit gegen mechanische Belastung, Witterung usw. von den metallischen Teilen nicht unterscheiden.

JP-A-07 053 922 offenbart ein wasser ab weisendes Polier mittel and Basis von Wachs, organischen Polysiloxan und Kohlen wassertoffen als Lösungsmittel.

Bei den sogenannten 2K-Abdeckungen von Airbageinheiten wurde versucht, die Produkte im unlackierten Zustand einzusetzen. Die Oberfläche der 2K-Abdeckungen von Airbageinheiten zeigten jedoch einen zu hohen Glanzgrad, eine Inhomogenität der Oberfläche und eine nicht ausreichende Kratzfestigkeit. Aus ökonomischen und ökologischen Gründen ist man bestrebt, eine nachträgliche Lackierung auszuschließen.

Der Erfindung liegt die Aufgabe zugrunde, ein oberflächenverbesserndes Material zur Behandlung für nichtlackierte Kunststoffoberflächen, vorzugsweise für im Automobilbau eingesetzte Kunststoffe und insbesondere für 2K-Abdeckungen von Airbageinheiten zu schaffen. Mit den oberflächenverbessernden Materialien soll eine verminderte Glanzwirkung, eine verbesserte Kratzfestigkeit und eine Homogenisierung der sichtbaren Oberfläche der Kunststoffteile erreicht werden.

Die Aufgabe wird erfindungsgemäß durch ein oberflächenverbesserndes Material erreicht, das aus einer Mischung aus
a) einer Hartwachskomponente, z.B. paraffinischen Wachsen, gelöst in Kohlenwasserstoffen und
b) einer Zubereitung aus Wachsen, Silikonen und organischen Pigmenten, gelöst in isoparaffinischen Kohlenwasserstoffen
besteht.

Die Komponenten a und b der oberflächenverbessernden Materialien können in weiten Grenzen miteinander vermischt werden. Das Mischungsverhältnis richtet sich dabei nach der gewünschten Oberfläche der zu behandelnden Kunststoffteile. So gelangen zur Farbkorrektur der Kunststoffoberflächen Mischungen mit einem großen Anteil an der Komponente b zum Einsatz. Steht die Verminderung der Glanzwirkung der Oberfläche bzw. die Verbesserung der Kratzfestigkeit im Vordergrund, überwiegt der Anteil der Komponente a.

Bei der Komponente a handelt es sich um eine sprühfähige Lösung der paraffinischen Wachse in Kohlenwasserstoffen als Lösungsmittel.

Bei der Komponente b handelt es sich ebenfalls um eine sprühfähige Lösung der eingesetzten Mischung aus Wachsen, Silikonen und organischen Pigmenten in isoparaffinischen Kohlenwasserstoffen als Lösungsmittel.

Die eingesetzten organischen Pigmente entsprechen in ihrem Farbton in etwa den eingesetzten Farbstoffen in der Spritzgußmasse für die Oberflächenschicht bei den 2K - Spritzgußteilen, wie Abdeckungen von Airbageinheiten.

Je nach notwendigem Bearbeitungsschritt bei den zu behandelnden Kunstoffteilen werden die einzelnen Komponenten a und b des oberflächenverbessernden Materials vor ihrem Einsatz im gewünschten Verhältnis gemischt und eventuell mit weiterem Lösungsmittel auf die gewünschte Verarbeitungskonzentration eingestellt.

Das oberflächenverbessernde Material kann beispielsweise in einer automatischen Anlage mit üblichen Sprühpistolen auf die zu behandelnden Teile aufgesprüht werden. Selbstverständlich sind auch andere Varianten für die Auftragsverfahren des oberflächenverbessernden Materials möglich.

Vorzugsweise wird die Behandlung mit den oberflächenverbessernden Materialien in eine automatische Anlage zur Herstellung von Kunststoffspritzgußteilen integriert. Dabei werden die erhaltenen Spritzgußteile im noch warmen spritzfrischen Zustand mit dem anmeldungsgemäßen oberflächenverbessernden Material besprüht und nach Abdunstung des Lösungsmittels durch die aus dem Spritzgußprozeß den Teilen innewohnende Energie z. B. durch Polieren mit geeigneten Textilien auf den gewünschten Glanzgrad eingestellt.

Selbstverständlich können die mit dem oberflächenverbessernden Material besprühten Teile nach Abdunstung des Lösungsmittels auch ohne eine weitere Behandlung eingesetzt werden.

Bei einer anderen Variante werden die Spritzgußteile im erkalteten Zustand in einem eigenständigen Prozeß durch eine Sprühkabine geführt, in der das anmeldungsgemäße oberflächenverbessernde Material aufgetragen wird. Die Abdunstung des Lösungsmittel aus dem aufgetragenen erfindungsgemäßen oberflächenverbessernden Material benötigt bei dieser Variante längere Zeit. Die anschließende Führung der behandelten Teile durch einen Wärmeofen verkürzt die Zeit der Abdunstung.

In einer weiteren Variante wird das oberflächenverbessernde Material wiederum in einem eigenständigen Prozeß auf die zu behandelnden Spritzgußteile aufgetragen, jedoch werden die zu behandelnden Teile vorher erwärmt. Dadurch wird eine bessere Haftfestigkeit des aufgespritzten oberflächenverbessernden Materials erreicht und gleichzeitig die Abdunstungszeit für das Lösungsmittel verkürzt.

Auch bei den beiden letzten Einsatzvarianten des erfindungsgemäßen oberflächenverbessernden Materials schließt sich nach Abdunstung des Lösungsmittels ein Polieren oder eine Vergleichmäßigung des Aussehens der Oberfläche durch ein Reiben mit Textilien an.

## Patentansprüche

1. Oberflächenverbesserndes Material für nichtlackierte Kunststoffoberflächen, **dadurch gekennzeichnet,** daß es aus einem Gemisch aus
a) einer Hartwachskomponente, z.B. paraffinischen Wachsen, gelöst in Kohlenwasserstoffen und
b) einer Mischung aus Wachsen, Silikonen und organischen Pigmenten, gelöst in isoparaffinischen Kohlenwasserstoffen
besteht.

2. Oberflächenverbesserndes Material nach Anspruch 1, **dadurch gekennzeichnet,** daß das Gemisch in unterschiedlichsten Mischungsverhältnissen der Komponenten a und b zueinander zur Anwendung gelangt.

## Claims

1. Surface-improving material for non-painted plastics surfaces characterised in that it comprises a mixture of
a) a hard wax component such as paraffin wax, dissolved in hydrocarbons, and
b) a mixture of waxes, silicones and organic pigments, dissolved in iso-paraffin hydrocarbons.

2. Surface-improving material according to claim 1
characterised in that the mixture is used in the most varied of mixing ratios between the components a) and b).

## Revendications

1. Matériau améliorant les surfaces pour des surfaces de matière plastique non vernies, caractérisé en ce qu'il consiste en
a) un composant de cire dure, par exemple de cires parafiniques, dissous dans des hydrocarbures et
b) une combinaison de cires, de silicones et de pigments organiques, dissous dans des hydrocarbures isoparaffiniques.

2. Matériau améliorant les surfaces selon la revendication 1, caractérisé en ce que le mélange trouve application dans les rapports de combinaison les plus variés des composants a et b.
